# EUROPEAN PATENT APPLICATION

(11) **EP 1 897 647 A2**
(43) Date of publication of application: **12.03.2008**
(21) Application number: 07253540.4
(22) Date of filing: 07.09.2007
(51) Int. Cl.: B23K 9/10

(54) **Systems and methods for providing parelleling power sources for arc cutting and welding**

(30) Priority: 11.09.2006 US 530638
(71) Applicant: THE ESAB GROUP, INC., Florence, South Carolina 29501 (US)
(72) Inventor: Eldridge, Richard A., Florence South Carolina 29501 (US)
(74) Representative: Naismith, Robert Stewart

(57) **Abstract**

Disclosed is a system for interdependent control of multiple power sources. The system includes at least first and second power sources for supplying power to an electrical load. At least first and second sensors are respectively coupled with outputs of the first and second power sources, such that the first and second sensors respectively emit first and second signals indicative of the output of the first and second power sources. A comparator unit is coupled to the first and second sensors for comparing the first and second signals emitted by the first and second sensors. The comparator unit is configured for emitting a difference signal indicating a difference between the first and second signals. A controller unit coupled to the comparator unit and at least one of said first and second power sources is configured for controlling at least one of said first and second power sources based on the difference signal.

## Description

### BACKGROUND OF THE INVENTION

### 1. Field of the Invention

The present invention relates to control systems for electrical power sources, and more particularly to a system for enabling power sources to operate in parallel.

### 2. Description of Related Art

Power sources are typically connected as part of an electrical circuit to one or more electrical devices that require energy for operation. The devices thus connected tend to utilize the supplied power to perform a function, and in the process these devices dissipate some of the energy provided by the power source. As such, these devices, as well as other energy-dissipating elements present in the circuit of the power source (such as resistors and other components), are often referred to as electrical loads, or simply loads. In order for such devices to perform their intended functions, an adequate amount of power must be supplied to address the load, *i.e.,* to power the device while accounting for all of the other sources of energy dissipation in the circuit.

In practice, once the power requirements for a given load are determined, the appropriate power source is simply chosen from amongst the various commercially-available power sources. However, in some applications, energy requirements are too demanding to be satisfied by commercially-available power sources. For example, arc cutting and/or welding applications can require significant levels of power in order to be performed effectively.

In such cases, two alternative solutions may be employed. First, a power source can be custom-made for the application at issue, at a significant expense. Second, multiple commonly-available power sources can be enlisted to provide power in parallel to the load. The latter approach is less expensive than the former; however, that approach has the disadvantage that the current supplied by each power source must be regulated and adjusted independently. Further, when the power sources are constant-voltage sources *(i.e.,* operate by maintaining a specified voltage drop across the terminals of the power source), one encounters the added disadvantage that small differences between the voltage settings of the two power sources results in most, if not all, of the current being supplied by only one of the two power sources. This is especially problematic for many of the commonly-available power sources, for which voltage specification and control tend to be somewhat coarse.

In light of the above, there is a need in the art for a system that facilitates the use of multiple power sources for providing power, in parallel, to a common load. In some embodiments, the system avoids the need to independently adjust the output of the power sources, and would assure that the power sources shared the current requirements to the desired extent. Further, in other embodiments, the system would allow one of the power sources to remain inactive until current requirements reach a defined threshold, at which time the system could activate the second power source. Finally, for some embodiments, the system could be expandable to use with an array of parallel power sources.

### BRIEF SUMMARY OF THE INVENTION

The present invention is directed to a system for use in a welding or cutting device for providing interdependent control of multiple power sources used for welding and cutting. In one embodiment, the system comprises at least first and second sensors for respectively coupling to outputs of at least two power sources. The first and second sensors respectively emit first and second signals indicative of the respective outputs of the power sources. A comparator unit coupled to the first and second sensors is configured for comparing the first and second signals emitted by said first and second sensors and emitting a difference signal indicating a difference between the first and second signals. The system also comprises a controller unit coupled to the comparator unit and configured for coupling to and controlling at least one of the two power sources in the welding or cutting process based on the difference signal from the comparator unit. In some embodiments, the controller unit is configured for controlling the output of at least one of the power sources to alter the difference signal to substantially equal zero. In other embodiments, the system further comprises a scaling unit coupled to the first and second sensors and the comparator unit; the scaling unit alters the value of at least one of the first and second signals prior to input into the comparator unit. In still other embodiments, the system further comprises a threshold detector coupled to the output of the first sensor and configured for coupling to an input of the second power source. In such embodiments, the first sensor is configured to couple to an output of a first power source, the second sensor is configured to couple to an output of a second power source, and the threshold detector compares the first signal from the first sensor to a threshold and configures to control the second power source to output a signal when the first signal is greater than or equal to the threshold. In yet another embodiment, the controller unit is configured for coupling to respective inputs of both of the power sources for controlling both of the power sources based on the difference signal emitted from the comparator unit.

The present invention is also directed to a system for interdependent control of multiple power sources. In one embodiment, the system comprises at least first and second power sources for supplying power to an electrical load. At least first and second sensors are respectively coupled with outputs of the first and second power sources, such that the first and second sensors respectively emit first and second signals indicative of the output of the first and second power sources. A comparator unit is coupled to the first and second sensors for comparing the first and second signals emitted by the first and second sensors. The comparator unit is configured for emitting a difference signal indicating a difference between the first and second signals. A controller unit coupled to the comparator unit and at least one of said first and second power sources is configured for controlling at least one of said first and second power sources based on the difference signal. In different embodiments, the power sources provide power in parallel to one load and, alternatively, to respective first and second electrical loads. In one embodiment, the first and second sensors are configured to detect current output from the power sources. In still another embodiment, the first and second sensors are configured such that they are electrically isolated from the outputs of the first and second power sources.

The present invention is also directed to a system for controlling the power provided to multiple electrical loads. In one embodiment, the system comprises at least first and second sensors for respectively sensing signals input into at least two electrical loads, at least one of the electrical loads being variable. The first and second sensors respectively emit first and second signals indicative of the respective signals input to the electrical loads. A comparator unit coupled to the first and second sensors is configured for comparing the first and second signals emitted by said first and second sensors and emitting a difference signal indicating a difference between the first and second signals. A controller unit coupled to the comparator unit is configured for controlling one of the variable electrical loads based on the difference signal.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
Figure 1a is a block diagram representation of an electrical system for interdependent control of two power sources, the electrical system incorporating a control system configured in accordance with one embodiment of the present invention;
Figure 1b is a block diagram representation of an electrical system for interdependent control of two power sources supplying power to independent loads, the electrical system incorporating a control system configured in accordance with one embodiment of the present invention;
Figure 2 is a block diagram representation of one embodiment of the electrical system of Figure 1;
Figure 3 is a block diagram representation of an electrical system for interdependent control of two power sources, the electrical system including a control system which has a scaling unit in accordance with an embodiment of the present invention;
Figure 4 is a circuit diagram of an example embodiment of the control system of Figure 2;
Figure 5 illustrates a system for performing arc cutting, the system incorporating a control system configured in accordance with an embodiment of the present invention;
Figure 6 is a block diagram representation of an electrical system in which a series of control systems configured in accordance with an embodiment of the present invention act to control the outputs of a series of power sources in response to the output of a central power source; and
Figure 7 is a block diagram representation of an electrical system in which a control system controls one power source to provide power to both a fixed electrical load and a variable electrical load by controlling the power requirement of the variable electrical load, the control system being configured in accordance with another embodiment of the present invention.

### DETAILED DESCRIPTION OF THE INVENTION

The present invention now will be described more fully hereinafter with reference to the accompanying drawings, in which some, but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

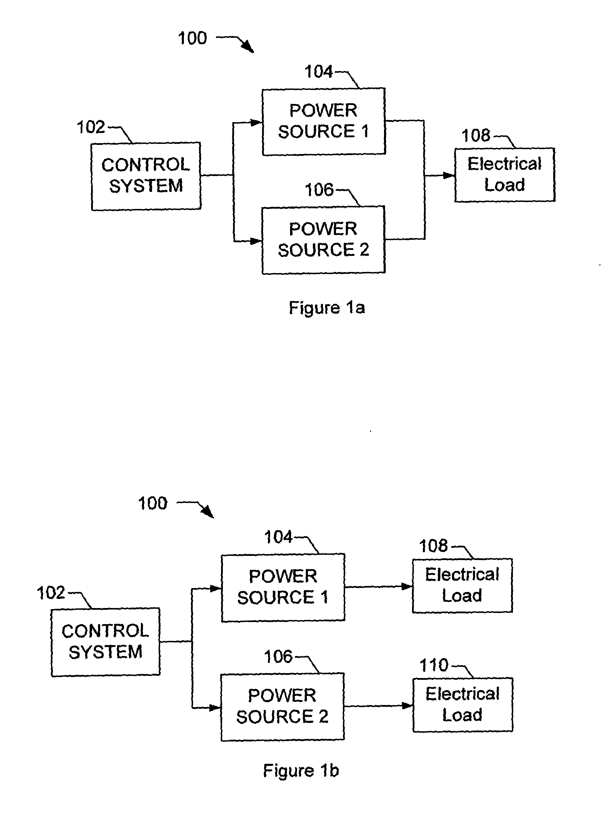

Referring to Figure 1a, therein is shown a block diagram representing an electrical system 100 comprising a control system 102 for interdependent control of two power sources 104,106, the control system 102 being in accordance with one embodiment of the present invention. Electrical system 100 includes first and second power sources 104,106 supplying power in parallel to an electrical load 108. Alternatively, as represented in the block diagram of Figure 1b, the control system 102 can be used to interdependently control two power sources 104,106 respectively supplying power to two independent electrical loads 108,110.

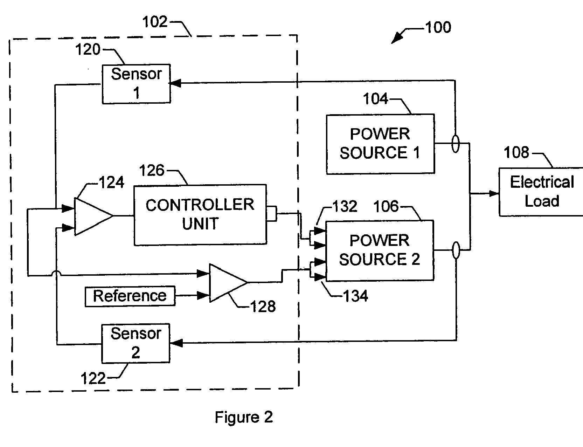

Referring to Figure 2, electrical system 100 is shown again in block diagram form, with control system 102 represented in more detail. In this embodiment, the control system 102 comprises first and second sensors 120,122, which couple, respectively, to the outputs of the first and second power sources 104,106 and emit signals indicative of those outputs. For example, in one embodiment, the sensors 120,122 include mechanisms for detecting the current output by the power sources 104,106. Alternatively, in another embodiment, the outputs of power sources 104,106 are optical signal currents, with the sensors 120,122 including mechanisms for detecting the intensity of the optical energy. In still another embodiment, the power sources 104,106 provide different types of power, with the appropriate type of sensor being utilized to communicate with the output of the associated power source, such as, for example, sensors connected to measure a voltage of the output of the power sources.

In one embodiment, sensors 120,122 are electrically isolated from the outputs of the power sources 104,106; examples of such sensors are non-contacting current sensors such as Hall Effect sensors, which are capable of measuring the current output of the power sources without being electrically coupled thereto. Maintaining electrical isolation of the sensors 120,122 from the outputs being sensed allows the power sources themselves to remain electrically isolated; such electrical isolation of the power sources has the advantage of avoiding unintended currents between devices due to unequal levels of electrical ground, or "ground loops." Maintaining the electrical isolation of power sources has the added advantage of allowing power sources of different type to be utilized together; for example, a high-frequency switching power source could readily be used together with a thyristor controlled, tapped transformer, or a fixed output type power source.

The Control system 102 of Figure 2 also comprises a comparator unit 124 coupled to the sensors 120,122. Comparator unit 124 compares the signals emitted by the sensors 120,122 to determine a measure of difference between the signals emitted by the sensors 120,122, and emits a difference signal indicative of that difference. For example, in a specific embodiment, the difference signal indicates the magnitude of the difference in magnitudes of the signals emitted by the sensors 120,122. The difference signal is communicated to the controller unit 126, which is coupled to the second power source 106 so as to control the output of second power source 106 based on the difference signal. The second power source 106 may include a specific controlling input 132 for coupling to/communication with the controller unit and receiving output instructions. More specifically, the second power source may include a first input 132 that allows for adjustment of the power source and a second input 134 that either enables or disables the operation of the power source. In this embodiment of the present invention, the controller unit receives the difference signal from the first and second sensors 120,122 and controls the operation of the second power source accordingly.

In some embodiments, a second power source may only be introduced after the first power source reaches a selected threshold of output, such that both power sources are not always in operation. For example, as illustrated in Figure 2, the Control system 102 may further comprise a threshold detector 128. The threshold detector is in communication with the output of the first sensor 120 as well as with the second input 134 of the second power source 106. Threshold detector 128 compares the signal from the first sensor 120, that signal being indicative of the output of the first power source, to a threshold. In some embodiments, the threshold is variable, such that it can be selected for a specific application. When the signal from sensor 120 is greater than or equal to the threshold, the threshold detector 128 activates the second power source 106 by sending a signal to the second input 134, which enables operation of the second power source. Conversely, threshold detector 128 can deactivate second power source 106 when the signal from first detector 120 is less than the threshold, by either ceasing to output or providing a null value to the second input 134 of the second power source. As noted above, the control system 102 can be used without a threshold detector, in which case controller unit 126 continuously governs the output of power source 106 in response to the difference signal.

The above-described control system 102 has several beneficial uses. For example, the controller unit 126 of control system 102 may control the output of the second power source 106 to alter the difference signal to a specified difference. In this way, control system 102 acts to maintain an offset in the outputs of power sources 104,106. Further, if the desired difference signal is specified as zero, control system acts to equalize the outputs of the power sources 104,106.

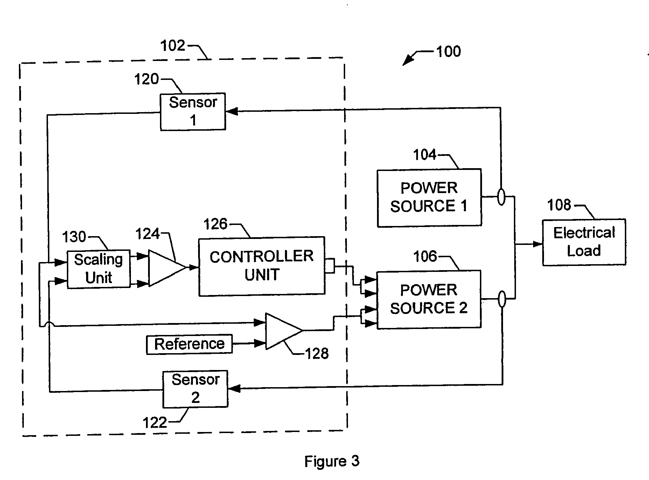

Referring to Figure 3, therein is shown a block diagram representing an electrical system 100 including a control system 102 for interdependent control of two power sources 104,106, the control system 102 being in accordance with another embodiment of the present invention. Control system 102 comprises a scaling unit 130 in communication with the first and second sensors 120,122, as well as with the comparator unit124. The scaling unit 130 acts to alter one or both of the values of the signals output by the sensors 120,122 prior to input of the signals to the comparator unit 124. Comparator unit 124 therefore acts to compare the signals in their scaled forms, and the controller unit 126 controls the output of the second power source 106 in response to the difference between the scaled signals. A useful feature of the control system 102 of this embodiment as depicted in Figure 3 is that it acts to maintain the outputs of power sources 104,106 in proportion to, and offset from, one another. In a specific embodiment, where the desired difference between the signals from the sensors 120,122 is zero, the controller unit 126 causes the outputs of the power sources 104,106 to be directly proportional to one another. By altering the scaling unit, in other embodiments, the controller unit controls the second power source to operate with an output that is some selected factor of the first power source.

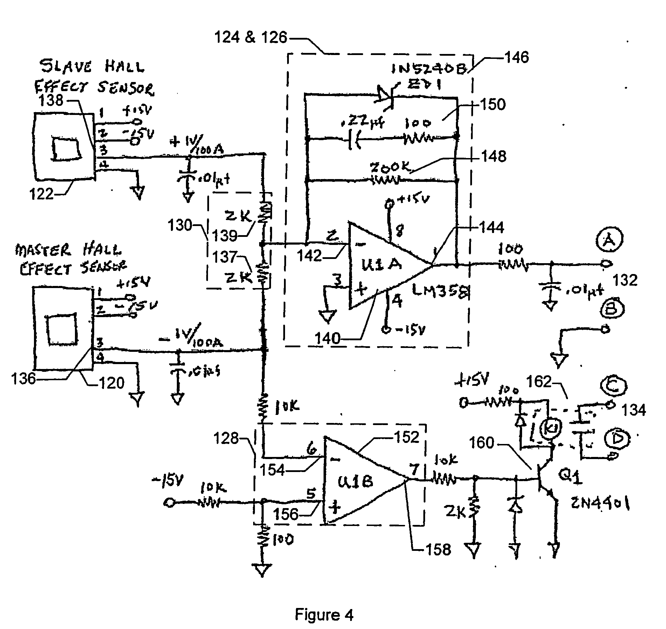

Referring to Figure 4, therein is shown a circuit diagram for one embodiment of the control system 102 as illustrated in Figure 3. In this embodiment, the first and second sensors 120,122 are current sensors embodied in Hall Effect sensors, which act to sense current outputs of respective first and second power sources (not shown). The first and second Hall Effect sensors 120,122 are chosen to produce voltages proportional to the respective current outputs of the first and second power sources; the sensors 120,122 yield voltages at similar voltage-to-current ratios, but of opposing voltage polarity.

As will be understood by those skilled in the art, Hall Effect sensors are electrically isolated from the output of the power sources as they sense the electromagnetic fields emitted from the wires carrying the output from the power sources and from this provide a calculated current value. Maintaining electrical isolation of the sensors 120,122 from the outputs being sensed allows the power sources themselves to remain electrically isolated; such electrical isolation of the power sources has the advantage of avoiding unintended currents between devices due to unequal levels of electrical ground, or "ground loops." Maintaining the electrical isolation of power sources has the added advantage of allowing power sources of different type to be utilized together.

In this embodiment, the comparator unit 124 and the controller unit 126 are embodied in an operational amplifier 140. The outputs 136,138 of the sensors 120,122 connect in parallel to one input 142 of the operational amplifier 140, each output 136,138 being in series with a respective resistor 137,139. The output 144 of operational amplifier 140 is connected in parallel with a Zener diode 146, a resistor 148, and a series-connected capacitor-resistor pair 150 to the first input 132 of the second power source functionally associated with the controlling input of the second power source (not shown). As such, the operational amplifier 140, in conjunction with the elements 146,148,150 acts as both comparator unit 124 (Figure 3) and controller unit 126 (Figure 3), processing and emitting a signal proportional to the difference between the signals from the sensors 120,122. Additionally, the resistors 137,139 act as the scaling unit 130 (Figure 3), in that choosing resistors 137,139 to have equal resistance results in the operational amplifier 140 receiving a signal indicative of the difference between the outputs of the sensors 120,122, while choosing unequal resistances for resistors 137,139 causes the operational amplifier 140 to receive a signal indicating the difference between the scaled outputs of the sensors 120,122. The resistor network 137, 139 could be replaced by a variable resistor network, such as by one or more potentiometers.

The output 136 of first sensor 120 is also connected to an input 154 of an operational amplifier 152. The signal received at input 154 is compared to a reference received at input 156 of operational amplifier 152 (i.e., a threshold value); when the signal from the first sensor 120 (received at input 154) is greater than or equal to the reference, the operational amplifier 152, which is connected at output 158 to a transistor 160, emits a voltage that allows transistor 160 to conduct current to, and activate, a relay 162. The relay 162 is functionally connected to the second input 134 of the second power source (not shown) to thereby enable the second power source. As such, the operational amplifier 152, transistor 160, and relay 162 act as the threshold detector 128 (Figure 3) by allowing operation of the second power source only when the output, detected by first sensor 120, surpasses the reference.

As discussed above, Figure 4 illustrates an embodiment of the present invention in which the operational amplifier 140 and elements 146,148,150 act as both comparator unit 124 (Figure 3) and controller unit 126 (Figure 3). However, the present invention does not require use of these specific elements. In another embodiment, the comparator and controller units 124,126 (Figure 3) are embodied in either an ASIC or a microprocessor. In the case of the microprocessor, the microprocessor, through a data interface, receives signals from the first and second sensors 120,122 and produces a digital signal indicating the difference in magnitude between those signals. In some embodiments, the microprocessor in response to a programmed or received instructions, scales the signals from the first and second sensors 120,122 before comparing them, in which case the microprocessor also embodies the scaling unit 130. In still another embodiment, the threshold detector 128 (Figure 3) is embodied in a microprocessor that receives, through a data interface, the signal from the first sensor 120 and activates the second power supply when that signal equals or surpasses a reference. The reference can be received by or programmed into the microprocessor. In yet another embodiment, the reference received at input 156 of operational amplifier 152 first connects to a potentiometer, such that the value of the reference received at input 156 of operational amplifier 152 is selectively controllable by modifying the resistance of the potentiometer.

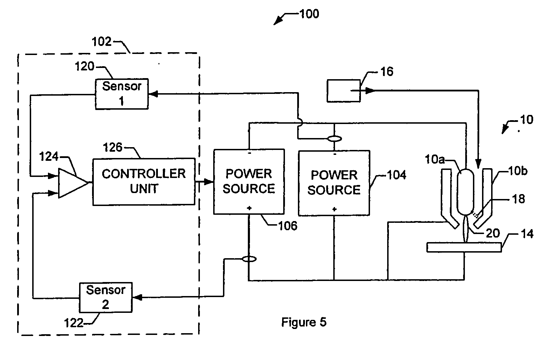

Figure 5 illustrates a control system 102 according to one embodiment of the present invention in use in a plasma cutting application. As illustrated, the plasma cutting torch 10 includes an electrode 10a and a nozzle 10b. Power sources 104,106 are connected in parallel to the torch. Control system 102 includes first and second sensors 120,122, which sense the output currents of the first and second power sources 104,106 and emit signals indicative of those currents. A comparator unit 124 receives from and compares the signals from the sensors 120,122, and the comparator unit 124 communicates a difference signal indicating the difference to the controller unit 126. The controller unit is coupled to the second power source 106 so as to control the output of power source 106 based on the difference in output currents of the power sources 104,106. The power sources together apply a negative voltage to the electrode 10a and a positive voltage to both the nozzle 10b and the work piece 14 to be cut. A gas source 16 supplies gas to the space between the electrode and nozzle.

During operation, an initial flow of gas is applied to the torch and a high frequency high voltage is applied between the electrode 10a and the nozzle 10b, whereby a spark discharge occurs. This spark discharge induces a pilot arc 18 between the electrode 10a and the nozzle 10b. The formation of the pilot arc creates a closed circuit path starting from the positive terminal of the power sources 104,106 and passing through the nozzle 10b, the pilot arc, the electrode 10a, and finally returning to the negative terminal of the voltage source. When the torch is placed near the work piece 14, a part of the pilot arc 18 current begins to flow toward the work piece 14, whereby a main arc 20 is created. At this point, the pilot arc between the nozzle and electrode is replaced by the main arc between the electrode and work piece.

The amount of current flowing from the torch 10 to the work piece 14 during cutting determines the cutting efficiency, and the requirements for this current are significant. As current is drawn from the power sources 104,106, sensors 120,122 sense the currents, and comparator unit 124 communicates the difference in the currents to the controller unit 126. The controller unit 126 then acts to modify the output of one power source 106 in order to assure that the current requirements are shared to a determined amount by the two sources 104,106.

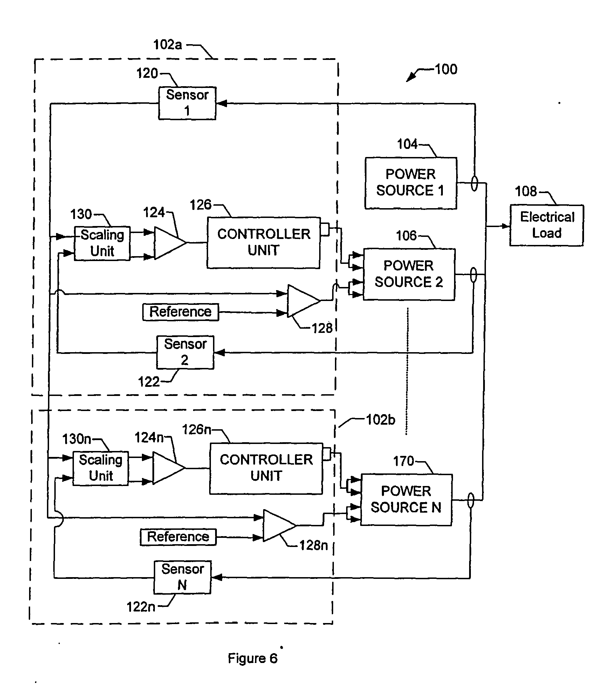

Referring to Figure 6, the present invention can be used to allow interdependent control of many power sources with respect to a single central source. System 100 includes a first power source 104, a second power source 106, a third power source 170, and as many power sources as one desires up to an n-th power sources, all supplying power to electrical load 108. The first power source 104 acts as a central power source, the output of which will be used to control the outputs of the other power sources 106,170. Each power source other than the first power source 104 has associated with it a control system 102a-b configured in accordance with the present invention. Each control system 102a-b senses the output of the central power source 104 and the output of the respective power source 106,170 associated with the respective control system. In this way, the outputs of sources 106,170 are controlled with respect to the output of the central power source 104.

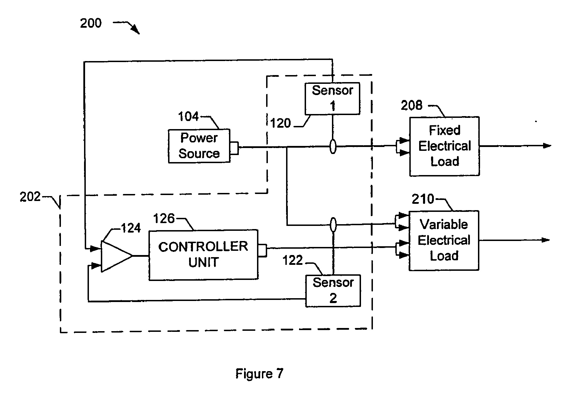

Figure 7 is a block diagram representation of another embodiment of the present invention, in which one power source 104 is used to provide power, in a controlled way, to a fixed electrical load 208 and a variable electrical load 210. A control system 202 includes first and second sensors 120,122 which communicate, respectively, with inputs of electrical loads 208,110 and emit signals indicative of those inputs. Control system 202 also includes a comparator unit 124 in communication with the sensors 120,122. Comparator unit 124 compares the signals emitted by the sensors 120,122 determining the difference and emitting a difference signal indicative of that difference. The difference signal is communicated to a controller unit 126, which is coupled to the variable electrical load 210 so as to control the magnitude of the load 210.

The above system 200 is desirable in cases where the power requirement of at least one electrical load is variable and the performance of that load is, at least at some times, non-critical, such that power being supplied to that load can be reduced in order to supply more power to a different load. An example might be ambient office lighting brightness, which can be reduced at times when, say, temperatures are higher and greater amounts of power are required for air conditioning units.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A system for interdependent control of multiple power sources, said system comprising:
at least first and second sensors for respectively coupling to outputs of at least two power sources, wherein said first and second sensors respectively emit first and second signals indicative of the respective outputs of the at least two power sources;
a comparator unit coupled to said first and second sensors for comparing the first and second signals emitted by said first and second sensors and emitting a difference signal indicating a difference between the first and second signals; and
a controller unit coupled to said comparator unit and configured to couple to at least one of the two power sources for controlling at least one of the two power sources based on the difference signal from said comparator unit.

2. A system according to Claim 1 wherein said controller unit is configured to control the output of at least one of the power sources to alter the difference signal.

3. A system according to Claim 1, wherein said controller unit is configured to control the output of at least one of the power sources to alter the difference signal to substantially equal zero.

4. A system according to Claim 1 further comprising a scaling unit coupled to said first and second sensors and said comparator unit, wherein said scaling unit alters the value of at least one of said first and second signals prior to input of the first and second signals into said comparator unit.

5. A system according to Claim 4, wherein said scaling unit is selected from the group consisting of: one or more resistors, one or more potentiometers, and one or more amplifiers.

6. A system according to Claim 1, said system further comprises a threshold detector coupled to the output of said first sensor and configured to couple to an input of the second power source, and wherein said first sensor is configured to couple with an output of a first power source, said second sensor is configured to couple with an output of a second power source, and said threshold detector compares the first signal from said first sensor to a threshold and configures to control the second power source to output a signal when the first signal is one of equal to or greater than the threshold.

7. A system according to Claim 6, wherein the second power source comprises a first input for enabling the second power source and a second input for controlling the output of the second power source, and wherein said threshold detector is configured to connect to the first input of the second power source and said controller unit is configured to connect to the second input of the second power source.

8. A system according to Claim 6, wherein the threshold used by said threshold detector is variable.

9. A system according to Claim 1, wherein said first and second sensors are configured such that they are electrically isolated from the outputs of the first and second power sources.

10. A system according to Claim 9, wherein said first and second sensors are configured to detect current output from the power sources.

11. A system according to Claim 1, wherein said comparator unit and controller are embodied in an operational amplifier that emits an analog signal proportional to a difference in magnitude between the first and second signals.

12. A system according to Claim 1, wherein said comparator unit and controller unit are embodied in a microprocessor that produces a digital signal indicating a difference in magnitude between the first and second signals.

13. A system according to Claim 1, wherein said controller unit is configured to couple to respective inputs of both of the power sources for controlling both of the power sources based on the difference signal emitted from said comparator unit.

14. A system for interdependent control of multiple power sources, the system comprising:
at least first and second power sources for supplying power to a common electrical load;
at least first and second sensors respectively coupled with outputs of said first and second power sources, wherein said first and second sensors respectively emit first and second signals indicative of the output of said first and second power sources;
a comparator unit coupled to said first and second sensors for comparing the first and second signals emitted by said first and second sensors and emitting a difference signal indicating a difference between the first and second signals; and
a controller unit coupled to said comparator unit and at least one of said first and second power sources for controlling at least one of said first and second power sources based on the difference signal.

15. A system according to Claim 14, wherein said controller unit is configured to control the output of at least one of the power sources to alter the difference signal to substantially equal zero.

16. A system according to Claim 14 further comprising a scaling unit coupled to said first and second sensors and said comparator unit, wherein said scaling unit alters the value of at least one of said first and second signals prior to input of the first and second signals into said comparator unit.

17. A system according to Claim 14, said system further comprises a threshold detector coupled to the output of said first sensor and configured to couple to an input of the second power source, and wherein said first sensor is configured to couple with an output of a first power source, said second sensor is configured to couple with an output of a second power source, and said threshold detector compares the first signal from said first sensor to a threshold and configures to control the second power source to output a signal when the first signal is one of equal to or greater than the threshold.

18. A system according to Claim 14, wherein said first and second sensors are configured such that they are electrically isolated from the outputs of the first and second power sources.

19. A system according to Claim 18, wherein said first and second sensors are configured to detect current output from the power sources.

20. A system according to Claim 14, wherein said controller unit is configured to couple to respective inputs of both of the power sources for controlling both of the power sources based on the difference signal emitted from said comparator unit.

21. A system for controlling the power provided to multiple electrical loads, the system comprising:
at least first and second sensors for respectively sensing signals input into at least two electrical loads, at least one of the electrical loads being variable, wherein said first and second sensors respectively emit first and second signals indicative of the respective signals input to the at least two electrical loads;
a comparator unit coupled to said first and second sensors for comparing the first and second signals emitted by said first and second sensors and emitting a difference signal indicating a difference between the first and second signals; and
a controller unit coupled to said comparator unit for controlling at least one of the variable electrical loads of the at least two electrical loads based on the difference signal.

22. A system according to Claim 21, wherein said controller unit is configured to control one of the variable electrical loads to alter the difference signal to substantially equal zero.

23. A system according to Claim 21 further comprising a scaling unit coupled to said first and second sensors and said comparator unit, wherein said scaling unit alters the value of at least one of said first and second signals prior to input of the first and second signals into said comparator unit.

24. A system according to Claim 21, wherein said first and second sensors are configured such that they are electrically isolated from the inputs of the electrical loads.

25. A system according to Claim 24, wherein said first and second sensors are configured to detect current input to the electrical loads.

26. A system according to Claim 21, wherein said controller unit is configured to couple to and control multiple electrical loads based on the difference signal emitted from said comparator unit.
